# EUROPÄISCHE PATENTANMELDUNG

(11) **EP 2 650 387 A1**
(43) Veröffentlichungstag der Anmeldung: **16.10.2013**
(21) Anmeldenummer: 12163717.7
(22) Anmeldetag: 11.04.2012
(51) Int. Cl.: C21C 7/10

(54) **Verfahren zum Betreiben einer Vakuumschmelzanlage und nach diesem Verfahren betriebene Vakuumschmelzanlage**

(71) Anmelder: Siemens Aktiengesellschaft, 80333 München (DE)
(72) Erfinder: Matschullat, Thomas, 90542 Eckental (DE); Rieger, Detlef, 85598 Baldham (DE)

(57) **Zusammenfassung**

Bei einem Verfahren zum Betreiben einer Vakuumschmelzanlage zur metallurgischen Behandlung einer Stahlschmelze und einer nach diesem Verfahren betriebenen Vakuumschmelzanlage, werden mit zumindest einem mittelbar oder unmittelbar an eine die Stahlschmelze aufnehmende Pfanne (6) akustisch gekoppelten Körperschallaufnehmer (30-1, 30-2, 30-3, 30-4) die in der Pfanne (6) erzeugten akustischen Signale aufgenommen und zur Ermittlung einer den Betriebszustand der Vakuumschmelzanlage charakterisierenden Größe herangezogen werden.

## Beschreibung

Die Erfindung bezieht sich auf ein Verfahren zum Betreiben einer Vakuumschmelzanlage. Außerdem bezieht sich die Erfindung auf eine mit diesem Verfahren betriebene Vakuumschmelzanlage.

In einer Vakuumschmelzanlage wird eine beispielsweise in einem vorangegangenen Schritt in einem Elektrolichtbogenofen erzeugte Stahlschmelze einer Nachbehandlung unterzogen, um in der Stahlschmelze noch enthaltene unerwünschte Begleitelemente zu eliminieren. Derartige Vakuumschmelzanlagen werden je nachdem, ob als Prozessgas ausschließlich ein Inertgas oder zusätzlich Sauerstoff eingesetzt wird als VD- bzw. VOD-Anlagen bezeichnet (Vacuum Decarburisation bzw. Vacuum Oxygen Decarburisation). Die Prozessdauer, d.h. die Zeitdauer bis zum Erreichen des angestrebten Gehaltes an störenden Begleitelementen, hängt wesentlich von der Rate ab, mit der die Prozessgase in die Stahlschmelze eingeblasen werden. Eine zu geringe Zufuhrrate kann dazu führen, dass die Temperatur der Stahlschmelze noch vor dem Erreichen des angestrebten Gehaltes an störenden Begleitelementen so weit absinkt, dass ein Nachheizen der Stahlschmelze in der Pfanne oder ein komplettes Nachbehandeln der Schmelze erforderlich ist. Eine hohe Zufuhrrate, kann jedoch insbesondere beim Vakuumfrischen mit Sauerstoff zu einem Überkochen bzw. Überschäumen der Schmelze führen, das mit einem erheblichen und zeitraubenden nachträglichen Reinigungsaufwand verbunden ist.

Die Einstellung der Rate, mit der Prozessgas der Stahlschmelze zugeführt wird, erfolgt dabei manuell, indem die Bedienperson mittels einer Kamera das Oberflächenbild der Schmelze und damit die Höhe der Schaumschlacke in der Pfanne beobachtet und dementsprechend die Zufuhrrate steuert. Die Prozessführung ist dementsprechend abhängig von der Erfahrung und der Aufmerksamkeit einer Bedienperson, so dass fehlerhafte oder ineffiziente Prozessführungen nicht sicher vermieden werden können. Darüber hinaus können fehlerhafte Betriebszustände, wie sie beispielsweise durch Undichtigkeiten der Vakuumanlage hervorgerufen werden nur sehr schwer oder sehr spät erkannt werden.

Der Erfindung liegt daher die Aufgabe zu Grunde, ein Verfahren zum Betreiben einer Vakuumschmelzanlage zur metallurgischen Behandlung einer Stahlschmelze anzugeben, mit dem die Prozesssicherheit verbessert ist. Außerdem liegt der Erfindung die Aufgabe zu Grunde, eine mit diesem Verfahren betriebene Vakuumschmelzanlage anzugeben.

Hinsichtlich des Verfahrens wird die genannte Aufgabe gelöst mit einem Verfahren mit den Merkmalen des Patentanspruches 1. Gemäß diesen Merkmalen werden mit zumindest einem mittelbar oder unmittelbar an eine die Stahlschmelze aufnehmende Pfanne akustisch gekoppelten Körperschallaufnehmer die in der Pfanne erzeugten akustischen Signale aufgenommen und zur Ermittlung einer den Betriebszustand der Vakuumschmelzanlage charakterisierenden Größe herangezogen.

Die Erfindung beruht dabei auf der Überlegung, dass die beim Betreiben der Vakuumschmelzanlage, insbesondere beim Einblasen von Prozessgas in der Pfanne entstehenden akustischen Signale je nach Entstehungsort der Schallerzeugung und der damit einhergehenden Ausbreitungswege bis zu einem Schallaufnehmer charakteristische Eigenschaften aufweisen, die es ermöglichen, aus den akustischen Signalen Information über den Betriebszustand der Vakuumschmelzanlage abzuleiten.

Wenn die akustischen Signale zur Ermittlung der Höhe oder der Dicke der in der Pfanne über dem Schmelzbad der Stahlschmelze befindlichen (Schaum)-Schlacke herangezogen werden, kann die Gefahr eines Überkochens der Schmelze rechtzeitig erkannt und es können dementsprechend Gegenmaßnahmen, beispielsweise Reduktion oder Abbruch der Zufuhr von Prozessgas, eingeleitet werden, die ein Überkochen verhindern.

Unter Höhe der Schaumschlacke ist im Folgenden die Lage des oberen Pegels der Schaumschlacke relativ zu einem festen Bezugspunkt der Vakuumschmelzanlage zu verstehen. Dies kann beispielsweise der Abstand zwischen dem Boden der Pfanne und dem oberen Pegel sein. Die Höhe der Schaumschlacke ist dabei wesentlich bestimmt durch deren Dicke, da die Höhe der eigentlichen Stahlschmelze praktisch konstant ist.

Ein solches Überkochen oder Überschäumen kann insbesondere dann sicher verhindert werden, wenn der zeitliche Differentialquotient der Höhe oder der Dicke der Schaumschlacke ermittelt wird. Auf diese Weise wird ein schnelles Ansteigen der Höhe der Schaumschlacke rechtzeitig erkannt.

In einer besonders bevorzugten Ausgestaltung der Erfindung wird die ermittelte Höhe bzw. Dicke und/oder deren zeitlicher Differentialquotient zur Regelung der Höhe der Schaumschlacke durch Steuerung der Zufuhr eines Prozessgases in die Pfanne herangezogen werden. Auf diese Weise kann der gesamte in der Vakuumanlage ablaufende Nachbehandlungsprozess entsprechend stabilisiert werden.

In einer weiteren vorteilhaften Ausführungsform werden die akustischen Signale zur Detektion einer Undichtigkeit in der Vakuumschmelzanlage herangezogen.

Hinsichtlich der Vakuumschmelzanlage wird die Aufgabe gemäß der Erfindung gelöst mit einer Vakuumschmelzanlage mit den Merkmalen des Patentanspruches 6. Gemäß diesen Merkmalen umfasst die Vakuumschmelzanlage zumindest einen mittelbar oder unmittelbar an die Pfanne akustisch gekoppelten Körperschallaufnehmer zum Aufnehmen der in der Pfanne erzeugten akustischen Signale sowie eine Steuer- und Auswerteeinrichtung mit einem darin implementierten Algorithmus zum Ermitteln einer den Betriebszustand der Vakuumschmelzanlage charakterisierenden Größe aus den von dem oder den Körperschallaufnehmern aufgenommenen akustischen Signalen.

Wenn der zumindest eine Körperschallaufnehmer an der Pfanne fixiert ist, können die innerhalb der Pfanne entstehenden Schallsignale mit hoher Empfindlichkeit registriert werden.

Eine besonders genaue Bestimmung der Höhe bzw. Dicke der Schlacke kann dann erfolgen, wenn der zumindest eine Körperschallaufnehmer in einem oberen Bereich der Pfanne angeordnet ist.

Weitere vorteilhafte Ausgestaltungen der Vakuumschmelzanlage sind in den weiteren Unteransprüchen angegeben.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

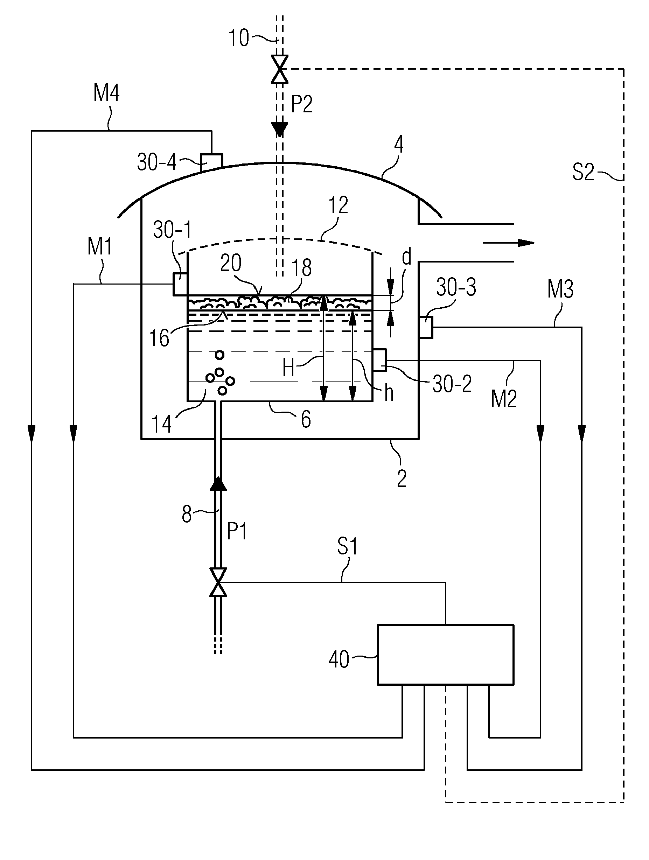

Für eine weitere Beschreibung der Erfindung wird auf das in einer schematischen Prinzipskizze dargestellte Ausführungsbeispiel der Figur verwiesen.

Gemäß der Figur umfasst eine Vakuumschmelzanlage einen Unterdruckkessel 2, der mit einem Deckel 4 verschlossen ist. In diesen Unterdruckkessel 2 ist eine mit einer Stahlschmelze befüllte Pfanne 6 eingebracht, an deren Unterseite eine Mehrzahl von Gaszufuhrleitungen 8 zum Zuführen von Prozessgas P1 angeschlossen sind, von denen in der Figur aus Gründen der Übersichtlichkeit nur eine dargestellt ist. Unterdruckkessel 2 und Deckel 4 bilden dementsprechend ein die Pfanne 6 umgebendes Anlagenteil.

Gestrichelt eingezeichnet ist die Ausführungsform einer sogenannten VOD-Vakuumschmelzanlage, bei der in die Pfanne 6 über eine weitere Gaszufuhrleitung 10 als weiteres Prozessgas P2 Sauerstoff eingeleitet werden kann. In dieser Ausführungsform ist die Pfanne 6 zusätzlich mit einem Schutzdeckel 12 abgedeckt, mit dem der Schlackenauswurf durch Überschäumen reduziert werden kann.

In der Pfanne 6 befindet sich Stahlschmelze, die sich aus einem flüssigen Schmelzbad 14, dessen Badspiegel 16 sich im Abstand h vom Boden der Pfanne 6 befindet, und einer darüber befindlichen Schaumschlacke 18 zusammensetzt, deren Dicke d beträgt, so dass sich deren oberer Pegel 20 in der Höhe H=h+d über dem Boden der Pfanne 6 befindet.

Sowohl an der Außenwand der Pfanne 6 als auch an der Wand des Unterdruckkessels 2 sowie auf dem Deckel 4 des Unterdruckkessels 2 sind Körperschallaufnehmer 30-1, 30-2, 30-3 und 30-4 angeordnet, mit denen die im Inneren und in der Umgebung der Pfanne 6, beispielsweise durch eine Vakuumpumpe, erzeugten akustischen Signale aufgenommen werden.

Die von den Körperschallaufnehmern 30-1, 30-2, 30-3 und 30-4 jeweils bereit gestellten Messsignale M1, M2, M3 bzw. M4 werden an eine Steuer- und Auswerteeinrichtung 40 weitergeleitet, in der sie ausgewertet und zur Ermittlung der Höhe H bzw. Dicke d der Schaumschlacke 18 herangezogen werden.

Die am Unterdruckkessel 2 oder am Deckel 4 vorzugsweise fest installierten Körperschallaufnehmer 30-3, 30-4 können auch innerhalb des Unterdruckkessels 2 angeordnet sein. Sie sind akustisch nicht unmittelbar mit der Wand der Pfanne 6 gekoppelt. Vielmehr werden die in der Pfanne 6 erzeugten akustischen Signale über entsprechende Gerüste auf die Wand des Unterdruckkessels 2 bzw. auf den Deckel 4 übertragen.

Die an der Außenwand der Pfanne 6 angeordneten und akustisch unmittelbar an die Wand der Pfanne 6 gekoppelten Körperschallaufnehmer 30-1, 30-2 sind abnehmbar, d.h. lösbar an der Pfanne 6 fixiert und werden erst nach Einsetzen der Pfanne 6 in den Unterdruckkessel 2 mit Schnellverschlüssen an die Pfanne 6 angekoppelt.

Der in der Pfanne 6 durch Einblasen von Prozessgas P1, P2 in die Stahlschmelze entstehende Schall breitet sich innerhalb des Schmelzbades 14 und innerhalb der Schaumschlacke 18 zur Wand hin aus, wobei die Schaumschlacke 18 schalldämpfend wirkt. Mit anderen Worten: Die Dicke d der Schaumschlacke 18 und deren Höhe H bzw. Lage innerhalb der Pfanne 6 beeinflusst wesentlich das insbesondere von dem im oberen Bereich der Pfanne 6 angeordneten Körperschallaufnehmer 30-1 aufgenommene Schallsignal.

Die erzeugten Messsignale M1, M2, M3 und M4 werden in der Auswerteeinrichtung 40 einer Signalanalyse unterzogen und unter Zuhilfenahme eines selbstlernenden physikalischen Modells wird die Höhe der Schaumschlacke ermittelt. Hierzu werden die Messsignale M1, M2, M3 und M4 beispielsweise einer schnellen Fouriertransformation unterzogen. Die auf diese Weise erzeugten Frequenzspektren werden mit Frequenzspektren verglichen, die in einer vorangehenden Lernphase bei unterschiedlichen Betriebszuständen der Vakuumschmelzanlage, insbesondere bei unterschiedlichem Druck im Unterdruckkessel 2, unterschiedlicher Zufuhrrate der Prozessgase P1, P2 sowie unterschiedlicher durch Aufnahme mit einer Kamera bestimmter Höhen der Schaumschlacke, gemessen worden sind. Mit Hilfe von Lern- und Mustererkennungsalgorithmen können dann durch Vergleich eines realen gemessenen Frequenzspektrums mit den in der Lernphase gewonnenen Frequenzspektren die Höhe H und insbesondere die Dicke d der Schaumschlacke 18 bzw. deren zeitlicher Differentialquotient dH/dt bzw. dd/dt ermittelt werden, ohne dass hierzu eine Beobachtung mit einer Kamera erforderlich ist.

In der Steuer- und Auswerteeinrichtung 40 werden in Abhängigkeit von der ermittelten Höhe H bzw. Dicke d und vorzugsweise von den ermittelten Differentialquotienten Steuersignale S1 und S2 erzeugt, mit denen die Zufuhrrate der Prozessgase P1, P2 gesteuert wird, um die Höhe der Schaumschlacke 18 auf einen konstanten Wert zu regeln oder aber zumindest ein Überschäumen von Schaumschlacke 18 zu verhindern.

Im dargestellten Ausführungsbeispiel sind sowohl an der Pfanne 6 als auch am Unterdruckkessel 2 eine Mehrzahl von Körperschallaufnehmern vorgesehen. Grundsätzlich kann das erfindungsgemäße Verfahren jedoch auch mit einem einzigen, vorzugsweise im oberen Bereich der Pfanne angeordneten Körperschallaufnehmer 30-1 erfolgen.

Durch Analyse der akustischen Signale können außerdem das Auftreten von durch Undichtigkeiten, beispielsweise nicht korrekt verschlossener Deckel 4, verursachten Betriebszuständen rechtzeitig erkannt und der entsprechende Mangel dementsprechend zügig behoben werden. Auch in diesem Fall werden in einer Lernphase vor der eigentlichen Inbetriebnahme unterschiedliche Betriebszustände eingestellt, beispielsweise Betrieb der Vakuumanlage mit korrekt und nicht korrekt verschlossenen Deckel, bewusste Einstellung von Leckagen, und die entsprechenden Körperschallsignale aufgenommen. Die Frequenzspektren der in dieser Lernphase gewonnenen Messsignale M1, M2, M3, M4 werden als typische Muster hinterlegt, so dass durch Vergleich eines im realen Betrieb gemessenen Frequenzspektrums mit den hinterlegten Mustern das Auftreten und die Ursache, d.h. der Ort einer Undichtigkeit festgestellt werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer Vakuumschmelzanlage zur metallurgischen Behandlung einer Stahlschmelze, bei dem mit zumindest einem mittelbar oder unmittelbar an eine die Stahlschmelze aufnehmende Pfanne (6) akustisch gekoppelten Körperschallaufnehmer (30-1, 30-2, 30-3, 30-4) die in der Pfanne (6) erzeugten akustischen Signale aufgenommen und zur Ermittlung einer den Betriebszustand der Vakuumschmelzanlage charakterisierenden Größe herangezogen werden.

2. Verfahren nach Anspruch 1,
bei dem die akustischen Signale zur Ermittlung der Höhe (H) oder der Dicke (d) der in der Pfanne über dem Schmelzbad (14) der Stahlschmelze befindlichen Schaumschlacke (18) herangezogen werden.

3. Verfahren nach Anspruch 2,
bei dem der zeitliche Differentialquotient der Höhe (H) bzw. der Dicke (d) ermittelt wird.

4. Verfahren nach Anspruch 2 oder 3,
bei dem die ermittelte Höhe (H) bzw. Dicke (d) und/oder deren zeitlicher Differentialquotient zur Steuerung der Zufuhr eines Prozessgases (P1, P2) in die Pfanne (6) herangezogen werden.

5. Verfahren nach Anspruch 1,
bei dem die akustischen Signale zur Detektion einer Undichtigkeit in der Vakuumschmelzanlage herangezogen werden.

6. Vakuumschmelzanlage zur metallurgischen Behandlung einer Stahlschmelze in einer Pfanne (6), mit zumindest einem mittelbar oder unmittelbar an die Pfanne (6) akustisch gekoppelten Körperschallaufnehmer (30-1 bis 30-4) zum Aufnehmen der in der Pfanne (6) erzeugten akustischen Signale sowie mit einer Steuer- und Auswerteeinrichtung (40) mit einem darin implementierten Algorithmus zum Ermitteln einer den Betriebszustand der Vakuumschmelzanlage charakterisierenden Größe aus den von dem oder den Körperschallaufnehmern (30-1 bis 30-4) aufgenommenen akustischen Signalen.

7. Vakuumschmelzanlage nach Anspruch 6,
bei dem der zumindest eine Körperschallaufnehmer (30-1, 30-2) an der Pfanne (6) fixiert ist.

8. Vakuumschmelzanlage nach Anspruch 7,
bei dem der zumindest eine Körperschallaufnehmer (30-1) in einem oberen Bereich der Pfanne (6) angeordnet ist.

9. Vakuumschmelzanlage nach Anspruch 6, 7 oder 8,
bei dem der zumindest eine oder zumindest ein weiterer Körperschallaufnehmer (30-3, 30-4) an einem die Pfanne (6) umgebenden Anlagenteil (2, 4) fest installiert ist.

10. Vakuumschmelzanlage nach einem der Ansprüche 6 bis 9,
bei dem in der Steuer- und Auswerteeinrichtung (40) ein Algorithmus implementiert ist, mit dem aus den akustischen Signalen die Höhe (H) bzw. Dicke (d) der Schaumschlacke (18) und/oder der zeitliche Differentialquotient dieser Höhe (H) bzw. Dicke (d) ermittelt wird.

11. Vakuumschmelzanlage nach Anspruch 10, bei dem die Steuer- und Auswerteeinrichtung (40) zum Regeln der Höhe (H) bzw. der Dicke (d) der Schaumschlacke (18) durch Steuern der Zufuhr eines Prozessgases (P1, P2) in die Pfanne (6) in Abhängigkeit von der Höhe (H) bzw. Dicke (d) und/oder dem zeitlichen Differentialquotienten der Höhe (H) bzw. Dicke (d) der Schaumschlacke (18) vorgesehen ist.

12. Vakuumschmelzanlage nach einem der Ansprüche 6 bis 11, bei dem in der Steuer- und Auswerteeinrichtung (40) ein Algorithmus implementiert ist, mit dem aus den akustischen Signalen das Vorhandensein einer Undichtigkeit in der Vakuumschmelzanlage detektiert wird.
